# EUROPEAN PATENT APPLICATION

(11) **EP 3 998 609 A2**
(43) Date of publication of application: **18.05.2022**
(21) Application number: 22150947.4
(22) Date of filing: 11.01.2022
(51) Int. Cl.: G10L 25/51, G08G 1/0965, G01S 3/808

(54) **AUTOMATIC AUDIO DATA LABELLING UTILIZING AUTONOMOUS DRIVING VEHICLE**

(30) Priority: 12.01.2021 US 202117147342
(71) Applicant: Baidu USA LLC, Sunnyvale, California 94089 (US)
(72) Inventor: LIN, Zejun, California, 94089 (US); LUO, Qi, California, 94089 (US); XU, Kecheng, California, 94089 (US); SUN, Hongyi, California, 94089 (US); REYNOLDS, Wesley, California, 94089 (US); WANG, Wei, California, 94089 (US)
(74) Representative: advotec.

(57) **Abstract**

Systems and methods for automatic generation of labelled audio data are disclosed. The method is performed by an autonomous driving system (ADS) of an autonomous driving vehicle (ADV). The method includes recording a sound emitted by an object within a driving environment, and converting the recorded sound into audio data. The method further includes capturing at least one position of the object while the sound is being recorded. The method further includes automatically labelling the audio data using the captured at least one position of the object as an audio label, to generate labelled audio data, where the labelled audio data is utilized to subsequently train a machine learning algorithm to recognize a sound source during autonomous driving of the ADV.

## Description

### TECHNICAL FIELD

Embodiments of the present disclosure relate generally to operating autonomous driving vehicles. More particularly, embodiments of the disclosure relate to automatic audio data labelling utilizing an autonomous driving vehicle.

### BACKGROUND

Vehicles operating in an autonomous mode (e.g., driverless) can relieve occupants, especially the driver, from some driving-related responsibilities. When operating in an autonomous mode, the vehicle can navigate to various locations using onboard sensors, allowing the vehicle to travel with minimal human interaction or in some cases without any passengers.

Motion planning and control are critical operations in autonomous driving. However, conventional motion planning operations estimate the difficulty of completing a given path mainly from its curvature and speed, without considering the differences in features for different types of vehicles. Same motion planning and control is applied to all types of vehicles, which may not be accurate and smooth under some circumstances.

In addition, the operations of motion planning and control generally require perception of surrounding obstacles or objects, and listening or detection of sound sources within a driving environment. Thus, obstacle identification and sound source identification would require labelling of data (e.g., sensor data) in order to train and test the data for machine learning models. Unfortunately, labelled data for supervised machine learning models is rare since a large number of parameters of a model would usually require a large amount of labelled data in order for a network to converge and fit into the data. Conventionally, data labelling is manually performed by humans and therefore, it is time consuming and costly (e.g., hiring people) to manually label data of such magnitude.

Also, due to the inherent defects of human beings, manually labelled data is not very accurate, which in turn affects the accuracy of the model. With respect to audio data labelling, the labelling of the position of a sound source is not an ideal task for human beings considering a human's sensory limitation. Besides, the manual labelling of the position of a sound source with respect to an audio sensor (e.g., a microphone) in real-time is not feasible in complicated scenarios, such as situations where the audio sensor used for audio recording is moving, the sound source is moving, or both of them are performing some relative moving (particularly when they are moving very fast). Additionally, robust audio data should consider many affecting factors such as the Doppler effect.

### SUMMARY

In an aspect, there is provided a computer-implemented method for automatic generation of labelled audio data, the method being performed by an autonomous driving system (ADS) of an autonomous driving vehicle (ADV), the method comprising:
recording a sound emitted by an object within a driving environment, and converting the recorded sound into audio data;
capturing at least one position of the object while the sound is being recorded; and
automatically labelling the audio data using the captured at least one position of the object as an audio label, to generate labelled audio data, wherein the labelled audio data is utilized to subsequently train a machine learning algorithm to recognize a sound source during autonomous driving of the ADV.

In another aspect, there is provided an autonomous driving system of an autonomous driving vehicle (ADV), the system including:
a processor; and
a memory coupled to the processor to store instructions, which when executed by the processor, cause the processor to perform operations of the method according to the above aspect.

In another aspect, there is provided method for automatic generation of labelled audio data in a driving scenario, the method including:
providing an autonomous driving vehicle (ADV) and another vehicle in a driving environment;
activating a sound on the other vehicle;
starting, on the ADV, audio recording of the sound and monitoring of one or more positions of the other vehicle;
obtaining, on the ADV, streaming audio data comprising the recorded audio and corresponding position information of the other vehicle;
stopping, on the ADV, the audio recording and the monitoring of the one or more positions of the other vehicle; and
downloading, on the ADV, the streaming audio data and the corresponding position information of the other vehicle as the labelled audio data.

With the disclosure, robust labelled audio data can be generated automatically for later use.

### BRIEF DESCRIPTION OF THE DRAWINGS

Embodiments of the disclosure are illustrated by way of example and not limitation in the figures of the accompanying drawings in which like references indicate similar elements.
Figure 1 is a block diagram illustrating a networked system according to one embodiment.
Figure 2 is a block diagram illustrating an example of an autonomous driving vehicle (ADV) according to one embodiment.
Figures 3A-3B are block diagrams illustrating an example of an autonomous driving system used with an autonomous driving vehicle according to one embodiment.
Figure 4 is a block diagram illustrating a system for automatic audio data labelling according to one embodiment.
Figure 5 is a diagram illustrating an audio data labelling system using an ADV and an object according to one embodiment.
Figure 6 is a flow diagram of a method for automatic audio data labelling according to one embodiment.
Figure 7 is a flow diagram of a method for automatic generation of labelled audio data in a specific driving scenario according to one embodiment.

### DETAILED DESCRIPTION

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosures.

Reference in the specification to "one embodiment" or "an embodiment" means that a particular feature, structure, or characteristic described in conjunction with the embodiment can be included in at least one embodiment of the disclosure. The appearances of the phrase "in one embodiment" in various places in the specification do not necessarily all refer to the same embodiment.

According to one aspect, a computer-implemented method for automatic generation of labelled audio data is described. The method is performed by an autonomous driving system (ADS) of an autonomous driving vehicle (ADV). The method includes recording a sound emitted by an object within a driving environment, and converting the recorded sound into audio data. The method further includes capturing at least one position of the object while the sound is being recorded. The method further includes automatically labelling the audio data using the captured at least one position of the object as an audio label, to generate labelled audio data, where the labelled audio data is utilized to subsequently train a machine learning algorithm to recognize a sound source during autonomous driving of the ADV.

In one embodiment, the method also includes determining that the captured at least one position of the object corresponds to at least one position of a sound source that emits the sound. Automatically labelling the audio data may include tagging the audio data with the captured position of the object. Capturing the position of the object may include determining a direction vector from the ADV to the object, and determining a direction angle based on the direction vector and a reference horizontal axis of the ADV. In one embodiment, the ADV is stationary and the object is in motion, the ADV is in motion and the object is stationary, or the ADV and the object are in motion. In one embodiment, the object is an emergency vehicle and the sound is a siren sound.

According to another aspect, a method for automatic generation of labelled audio data in a driving scenario is described. The method includes providing an autonomous driving vehicle (ADV) and another vehicle in a driving environment. The method further includes activating a sound on the other vehicle. The method further includes starting, on the ADV, audio recording of the sound and monitoring of one or more positions of the other vehicle. The method further includes obtaining, on the ADV, streaming audio data comprising the recorded audio and corresponding position information of the other vehicle. The method further includes stopping, on the ADV, the audio recording and the monitoring of the one or more positions of the other vehicle. The method further includes downloading, on the ADV, the streaming audio data and the corresponding position information of the other vehicle as the labelled audio data.

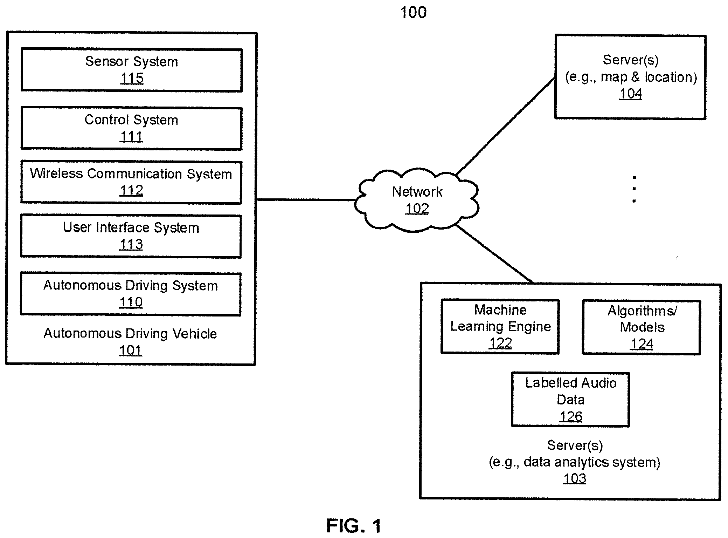

Figure 1 is a block diagram illustrating an autonomous driving network configuration according to one embodiment of the disclosure. Referring to Figure 1, network configuration 100 includes autonomous driving vehicle (ADV) 101 that may be communicatively coupled to one or more servers 103-104 over a network 102. Although there is one ADV shown, multiple ADVs can be coupled to each other and/or coupled to servers 103-104 over network 102. Network 102 may be any type of networks such as a local area network (LAN), a wide area network (WAN) such as the Internet, a cellular network, a satellite network, or a combination thereof, wired or wireless. Server(s) 103-104 may be any kind of servers or a cluster of servers, such as Web or cloud servers, application servers, backend servers, or a combination thereof. Servers 103-104 may be data analytics servers, content servers, traffic information servers, map and point of interest (MPOI) servers, or location servers, etc.

An ADV refers to a vehicle that can be configured to in an autonomous mode in which the vehicle navigates through an environment with little or no input from a driver. Such an ADV can include a sensor system having one or more sensors that are configured to detect information about the environment in which the vehicle operates. The vehicle and its associated controller(s) use the detected information to navigate through the environment. ADV 101 can operate in a manual mode, a full autonomous mode, or a partial autonomous mode.

In one embodiment, ADV 101 includes, but is not limited to, autonomous driving system (ADS) 110, vehicle control system 111, wireless communication system 112, user interface system 113, and sensor system 115. ADV 101 may further include certain common components included in ordinary vehicles, such as, an engine, wheels, steering wheel, transmission, etc., which may be controlled by vehicle control system 111 and/or ADS 110 using a variety of communication signals and/or commands, such as, for example, acceleration signals or commands, deceleration signals or commands, steering signals or commands, braking signals or commands, etc.

Components 110-115 may be communicatively coupled to each other via an interconnect, a bus, a network, or a combination thereof. For example, components 110-115 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

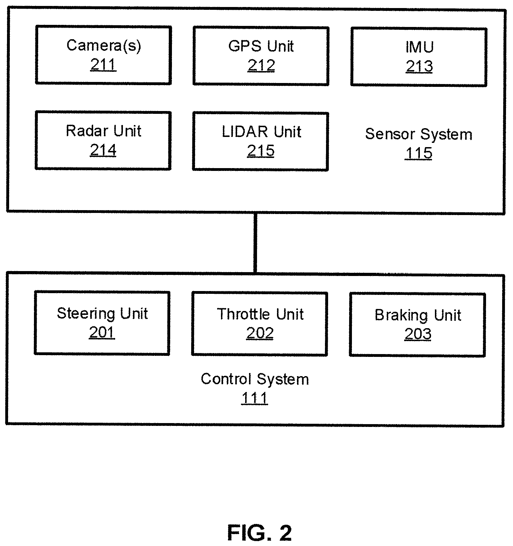

Referring now to Figure 2, in one embodiment, sensor system 115 includes, but it is not limited to, one or more cameras 211, global positioning system (GPS) unit 212, inertial measurement unit (IMU) 213, radar unit 214, and a light detection and range (LIDAR) unit 215. GPS system 212 may include a transceiver operable to provide information regarding the position of the ADV. IMU unit 213 may sense position and orientation changes of the ADV based on inertial acceleration. Radar unit 214 may represent a system that utilizes radio signals to sense objects within the local environment of the ADV. In some embodiments, in addition to sensing objects, radar unit 214 may additionally sense the speed and/or heading of the objects. LIDAR unit 215 may sense objects in the environment in which the ADV is located using lasers. LIDAR unit 215 could include one or more laser sources, a laser scanner, and one or more detectors, among other system components. Cameras 211 may include one or more devices to capture images of the environment surrounding the ADV. Cameras 211 may be still cameras and/or video cameras. A camera may be mechanically movable, for example, by mounting the camera on a rotating and/or tilting a platform.

Sensor system 115 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the ADV. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one embodiment, vehicle control system 111 includes, but is not limited to, steering unit 201, throttle unit 202 (also referred to as an acceleration unit), and braking unit 203. Steering unit 201 is to adjust the direction or heading of the vehicle. Throttle unit 202 is to control the speed of the motor or engine that in turn controls the speed and acceleration of the vehicle. Braking unit 203 is to decelerate the vehicle by providing friction to slow the wheels or tires of the vehicle. Note that the components as shown in Figure 2 may be implemented in hardware, software, or a combination thereof.

Referring back to Figure 1, wireless communication system 112 is to allow communication between ADV 101 and external systems, such as devices, sensors, other vehicles, etc. For example, wireless communication system 112 can wirelessly communicate with one or more devices directly or via a communication network, such as servers 103-104 over network 102. Wireless communication system 112 can use any cellular communication network or a wireless local area network (WLAN), e.g., using WiFi to communicate with another component or system. Wireless communication system 112 could communicate directly with a device (e.g., a mobile device of a passenger, a display device, a speaker within vehicle 101), for example, using an infrared link, Bluetooth, etc. User interface system 113 may be part of peripheral devices implemented within vehicle 101 including, for example, a keyboard, a touch screen display device, a microphone, and a speaker, etc.

Some or all of the functions of ADV 101 may be controlled or managed by ADS 110, especially when operating in an autonomous driving mode. ADS 110 includes the necessary hardware (e.g., processor(s), memory, storage) and software (e.g., operating system, planning and routing programs) to receive information from sensor system 115, control system 111, wireless communication system 112, and/or user interface system 113, process the received information, plan a route or path from a starting point to a destination point, and then drive vehicle 101 based on the planning and control information. Alternatively, ADS 110 may be integrated with vehicle control system 111.

For example, a user as a passenger may specify a starting location and a destination of a trip, for example, via a user interface. ADS 110 obtains the trip related data. For example, ADS 110 may obtain location and route data from an MPOI server, which may be a part of servers 103-104. The location server provides location services and the MPOI server provides map services and the POIs of certain locations. Alternatively, such location and MPOI information may be cached locally in a persistent storage device of ADS 110.

While ADV 101 is moving along the route, ADS 110 may also obtain real-time traffic information from a traffic information system or server (TIS). Note that servers 103-104 may be operated by a third party entity. Alternatively, the functionalities of servers 103-104 may be integrated with ADS 110. Based on the real-time traffic information, MPOI information, and location information, as well as real-time local environment data detected or sensed by sensor system 115 (e.g., obstacles, objects, nearby vehicles), ADS 110 can plan an optimal route and drive vehicle 101, for example, via control system 111, according to the planned route to reach the specified destination safely and efficiently.

Server 103 may be a data analytics system to perform data analytics services for a variety of clients. In one embodiment, data analytics system 103 includes machine learning engine 122. Based on labelled audio data 126, machine learning engine 122 generates or trains a set of rules, algorithms, and/or predictive models 124 for a variety of purposes, such as recognition of a sound source for motion planning and control. Algorithms 124 can then be uploaded on ADVs to be utilized during autonomous driving in real-time. As described in more detail herein below, labelled audio data 126 may include audio data of a sound source and positions of the sound source.

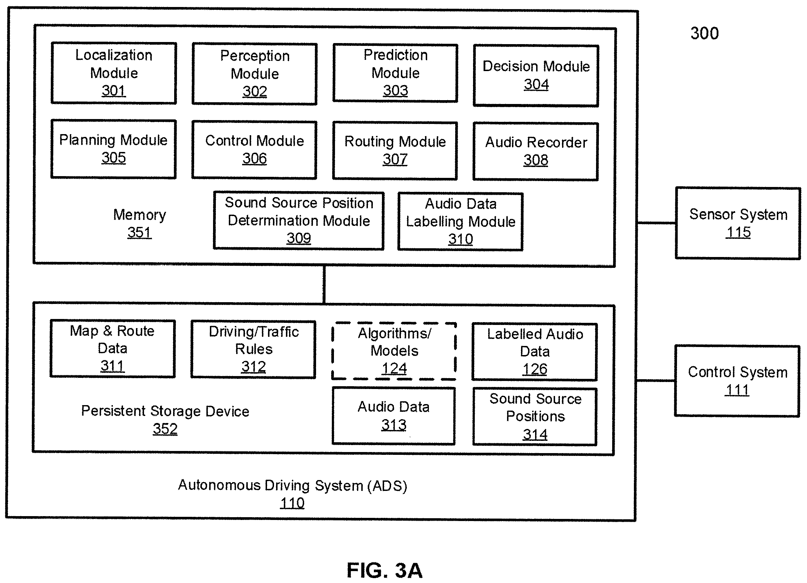

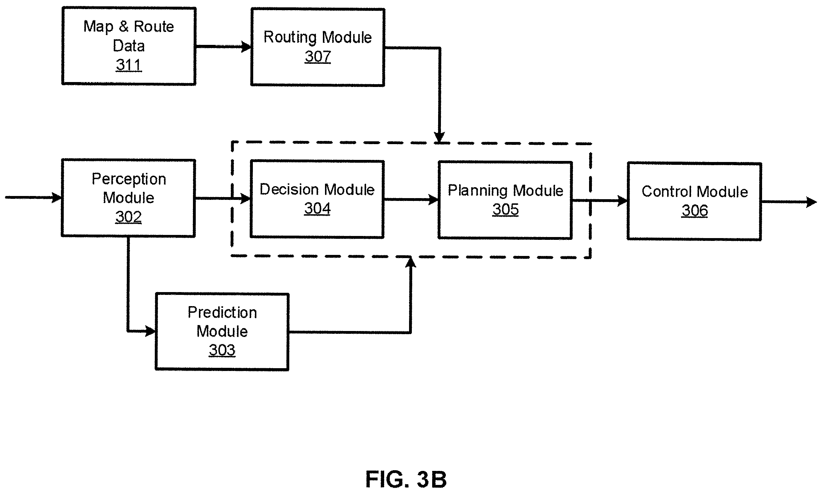

Figures 3A and 3B are block diagrams illustrating an example of an autonomous driving system used with an ADV according to one embodiment. System 300 may be implemented as a part of ADV 101 of Figure 1 including, but is not limited to, ADS 110, control system 111, and sensor system 115. Referring to Figures 3A-3B, ADS 110 includes, but is not limited to, localization module 301, perception module 302, prediction module 303, decision module 304, planning module 305, control module 306, routing module 307, audio recorder 308, sound source position determination module 309, and audio data labelling module 310.

Some or all of modules 301-310 may be implemented in software, hardware, or a combination thereof. For example, these modules may be installed in persistent storage device 352, loaded into memory 351, and executed by one or more processors (not shown). Note that some or all of these modules may be communicatively coupled to or integrated with some or all modules of vehicle control system 111 of Figure 2. Some of modules 301-310 may be integrated together as an integrated module.

Localization module 301 determines a current location of ADV 300 (e.g., leveraging GPS unit 212) and manages any data related to a trip or route of a user. Localization module 301 (also referred to as a map and route module) manages any data related to a trip or route of a user. A user may log in and specify a starting location and a destination of a trip, for example, via a user interface. Localization module 301 communicates with other components of ADV 300, such as map and route data 311, to obtain the trip related data. For example, localization module 301 may obtain location and route data from a location server and a map and POI (MPOI) server. A location server provides location services and an MPOI server provides map services and the POIs of certain locations, which may be cached as part of map and route data 311. While ADV 300 is moving along the route, localization module 301 may also obtain real-time traffic information from a traffic information system or server.

Based on the sensor data provided by sensor system 115 and localization information obtained by localization module 301, a perception of the surrounding environment is determined by perception module 302. The perception information may represent what an ordinary driver would perceive surrounding a vehicle in which the driver is driving. The perception can include the lane configuration, traffic light signals, a relative position of another vehicle, a pedestrian, a building, crosswalk, or other traffic related signs (e.g., stop signs, yield signs), etc., for example, in a form of an object. The lane configuration includes information describing a lane or lanes, such as, for example, a shape of the lane (e.g., straight or curvature), a width of the lane, how many lanes in a road, one-way or two-way lane, merging or splitting lanes, exiting lane, etc.

Perception module 302 may include a computer vision system or functionalities of a computer vision system to process and analyze images captured by one or more cameras in order to identify objects and/or features in the environment of the ADV. The objects can include traffic signals, road way boundaries, other vehicles, pedestrians, and/or obstacles, etc. The computer vision system may use an object recognition algorithm, video tracking, and other computer vision techniques. In some embodiments, the computer vision system can map an environment, track objects, and estimate the speed of objects, etc. Perception module 302 can also detect objects based on other sensors data provided by other sensors such as a radar and/or LIDAR.

For each of the objects, prediction module 303 predicts what the object will behave under the circumstances. The prediction is performed based on the perception data perceiving the driving environment at the point in time in view of a set of map/rout information 311 and traffic rules 312. For example, if the object is a vehicle at an opposing direction and the current driving environment includes an intersection, prediction module 303 will predict whether the vehicle will likely move straight forward or make a turn. If the perception data indicates that the intersection has no traffic light, prediction module 303 may predict that the vehicle may have to fully stop prior to enter the intersection. If the perception data indicates that the vehicle is currently at a left-turn only lane or a right-turn only lane, prediction module 303 may predict that the vehicle will more likely make a left turn or right turn respectively.

For each of the objects, decision module 304 makes a decision regarding how to handle the object. For example, for a particular object (e.g., another vehicle in a crossing route) as well as its metadata describing the object (e.g., a speed, direction, turning angle), decision module 304 decides how to encounter the object (e.g., overtake, yield, stop, pass). Decision module 304 may make such decisions according to a set of rules such as traffic rules or driving rules 312, which may be stored in persistent storage device 352.

Routing module 307 is configured to provide one or more routes or paths from a starting point to a destination point. For a given trip from a start location to a destination location, for example, received from a user, routing module 307 obtains route and map information 311 and determines all possible routes or paths from the starting location to reach the destination location. Routing module 307 may generate a reference line in a form of a topographic map for each of the routes it determines from the starting location to reach the destination location. A reference line refers to an ideal route or path without any interference from others such as other vehicles, obstacles, or traffic condition. That is, if there is no other vehicle, pedestrians, or obstacles on the road, an ADV should exactly or closely follows the reference line. The topographic maps are then provided to decision module 304 and/or planning module 305. Decision module 304 and/or planning module 305 examine all of the possible routes to select and modify one of the most optimal routes in view of other data provided by other modules such as traffic conditions from localization module 301, driving environment perceived by perception module 302, and traffic condition predicted by prediction module 303. The actual path or route for controlling the ADV may be close to or different from the reference line provided by routing module 307 dependent upon the specific driving environment at the point in time.

Based on a decision for each of the objects perceived, planning module 305 plans a path or route for the ADV, as well as driving parameters (e.g., distance, speed, and/or turning angle), using a reference line provided by routing module 307 as a basis. That is, for a given object, decision module 304 decides what to do with the object, while planning module 305 determines how to do it. For example, for a given object, decision module 304 may decide to pass the object, while planning module 305 may determine whether to pass on the left side or right side of the object. Planning and control data is generated by planning module 305 including information describing how vehicle 300 would move in a next moving cycle (e.g., next route/path segment). For example, the planning and control data may instruct vehicle 300 to move 10 meters at a speed of 30 miles per hour (mph), then change to a right lane at the speed of 25 mph.

Based on the planning and control data, control module 306 controls and drives the ADV, by sending proper commands or signals to vehicle control system 111, according to a route or path defined by the planning and control data. The planning and control data include sufficient information to drive the vehicle from a first point to a second point of a route or path using appropriate vehicle settings or driving parameters (e.g., throttle, braking, steering commands) at different points in time along the path or route.

In one embodiment, the planning phase is performed in a number of planning cycles, also referred to as driving cycles, such as, for example, in every time interval of 100 milliseconds (ms). For each of the planning cycles or driving cycles, one or more control commands will be issued based on the planning and control data. That is, for every 100 ms, planning module 305 plans a next route segment or path segment, for example, including a target position and the time required for the ADV to reach the target position. Alternatively, planning module 305 may further specify the specific speed, direction, and/or steering angle, etc. In one embodiment, planning module 305 plans a route segment or path segment for the next predetermined period of time such as 5 seconds. For each planning cycle, planning module 305 plans a target position for the current cycle (e.g., next 5 seconds) based on a target position planned in a previous cycle. Control module 306 then generates one or more control commands (e.g., throttle, brake, steering control commands) based on the planning and control data of the current cycle.

Note that decision module 304 and planning module 305 may be integrated as an integrated module. Decision module 304/planning module 305 may include a navigation system or functionalities of a navigation system to determine a driving path for the ADV. For example, the navigation system may determine a series of speeds and directional headings to affect movement of the ADV along a path that substantially avoids perceived obstacles while generally advancing the ADV along a roadway-based path leading to an ultimate destination. The destination may be set according to user inputs via user interface system 113. The navigation system may update the driving path dynamically while the ADV is in operation. The navigation system can incorporate data from a GPS system and one or more maps so as to determine the driving path for the ADV.

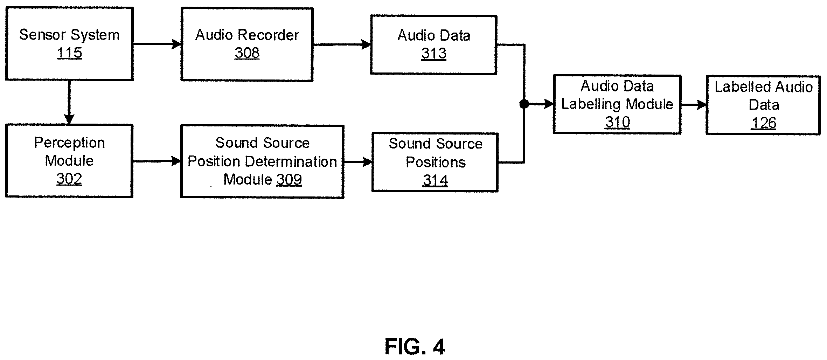

With additional reference to Figure 4, which is a block diagram illustrating a system for automatic audio data labelling according to one embodiment, audio recorder 308 may communicate with an audio sensor (e.g., microphone) from sensor system 115 to record or capture sound from the environment surrounding the ADV. For example, a user of the ADV may activate (turn on) audio recorder 308 through user interface system 113, and in response to the user's input to activate the audio recorder 308, audio recorder 308 may record the sound (e.g., a siren sound) emitted by an object (e.g., an emergency vehicle, such as a police vehicle, ambulance, fire truck, etc.) and convert it into audio data 313 (e.g., an audio file of a suitable format). When sufficient audio data is recorded (e.g., a specific data size or elapsed time has reached, or different driving scenarios have been covered), the user may deactivate (turn off) audio recorder 308, and audio data 313 may be stored in persistent storage device 352 or on a remote server (e.g., server 103).

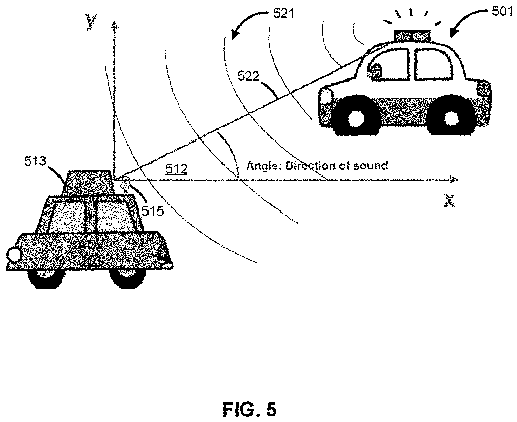

Concurrently, while audio recorder 308 is recording, perception module 302 and sound source position determination module 309 may communicate and/or operate with other sensors from system 115 (e.g., camera(s) 211, radar unit 214, LIDAR unit 215) to determine and capture one or more positions of a sound source. As previously described, perception module 302 can detect objects based on sensors data provided by other sensors, such as a radar, camera, and/or LIDAR, at different points in time. Using those sensors data, perception module 302 can determine a relative position of an object at a point in time, and sound source position determination module 309 may assume or determine that the relative position of the object corresponds to the position of a sound source (aspects relating to the determination of the position of the sound source are described in more detail herein below with respect to Figure 5). Module 309 then may store the relative position of the object as part of sound source positions 314, which may be stored in persistent storage device 352 or on a remote server (e.g., server 103).

Recorded audio data 313 and sound source positions 314 are provided to audio data labelling module 310 to automatically generate labelled audio data 126. In one embodiment, audio data labelling module 310 may append or tag sound source positions 314 (as audio labels) to audio data 313 to produce labelled audio data 126. Sound source positions 314 represent the relative positions of a source (e.g., an emergency vehicle) that emits the sound recorded as part of audio data 313. In another embodiment, module 310 may also tag one or more timestamps to audio data 313 and sound source positions 314 as part of labelled audio data 126. Each timestamp may include a current time at which the positions and sound were captured. Labelled audio data 126 may be stored locally in persistent storage device 352 and/or uploaded onto a remote server (e.g., server 103), and may be used as input to a machine learning engine that generates or trains a set of rules, algorithms, and/or predictive models for a variety of purposes, such as for motion planning and control.

Figure 5 is a diagram illustrating an audio data labelling system using an ADV and an object according to one embodiment. In Figure 5, the system includes an ADV 101 and an object 501 (e.g., another vehicle such as an emergency vehicle including police vehicle, ambulance, fire truck, etc.) operating within a driving environment. ADV 101 and object 501 may be configured in different driving scenarios. For example, one scenario may include the ADV 101 being stationary and object 501 being in motion (e.g., object 501 approaching ADV 101, object 501 moving away from ADV 101, object 501 moving around ADV 101). Another scenario may include object 501 being stationary and ADV 101 being in motion (e.g., ADV 101 approaching object 501, ADV 101 moving away from object 501, ADV 101 moving around object 501). Yet another scenario may include both ADV 101 and object 501 being in motion. Still another scenario may include both ADV 101 and object 501 being stationary.

In one embodiment, object 501 is configured to emit sound 521 (e.g., a siren generated by activating a siren sound player installed on object 501). Simultaneously, ADV 101 may be configured to record sound 521 (e.g., by audio recorder 308) using audio sensor 515 (e.g., microphone). While recording sound 521, perception sensor(s) 513 (e.g., camera(s), radar unit, LIDAR unit) and ADS 110 of ADV 101 may be enabled to detect a relative position of object 501. Audio sensor 515 and perception sensor(s) 513 may be part of sensor system 115.

In response to detecting object 501 in the driving environment, perception sensor(s) 513 may provide the coordinates of object 501 (e.g., x, y coordinates) in a Cartesian plane or 2-D map. Based on the provided coordinates and a reference horizontal axis (x-axis) of ADV 101, perception module 302 can determine a direction vector 522 drawn from ADV 101 to object 501. Based on the direction vector 522 and the reference horizontal axis of ADV 101, a direction angle 512 can be determined. Based on the direction angle 512 and direction vector 522, a height of object 501 (e.g., z coordinate) can also be determined. Thus, a position of object 501 (e.g., x, y, z coordinates) relative to ADV 101 can be determined. As previously described, audio source position determination module 309 may assume and correspond the position of object 501 to a position of a sound source that emits sound 521. Module 309 may capture or record the position as part of sound source positions 314.

Once sufficient audio data is recorded, audio recorder 308 and audio sensor 515 may be deactivated and the recorded sound may be converted and stored as part of audio data 313. Audio data labelling module 310 may tag sound source positions 314, as audio labels, to audio data 313 to produce labelled audio data 126. It is noted that Figure 5 only illustrates a single object 501 for simplicity. In some embodiments, multiple objects may be used in a scenario where each object may emit a same or different sound from another object, and ADV 101 may capture the emitted sounds and positions of some or all objects.

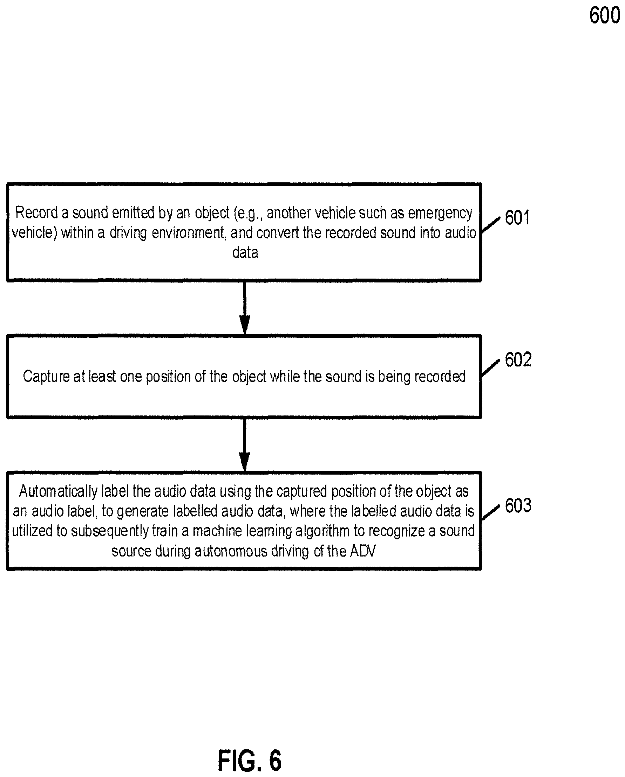

Figure 6 is a flow diagram of a method for automatic audio data labelling according to one embodiment. Method or process 600 may be performed by processing logic which may include software, hardware, or a combination thereof. For example, process 600 may be performed by ADS 110 of Figure 1.

Referring to Figure 6, at block 601, the processing logic records a sound emitted by an object (e.g., another vehicle such as emergency vehicle) within a driving environment, and converts the recorded sound into audio data. At block 602, the processing logic captures at least one position of the object while the sound is being recorded. At block 603, the processing logic automatically labels the audio data using the captured position of the object as an audio label, to generate labelled audio data, where the labelled audio data is utilized to subsequently train a machine learning algorithm to recognize a sound source during autonomous driving of the ADV.

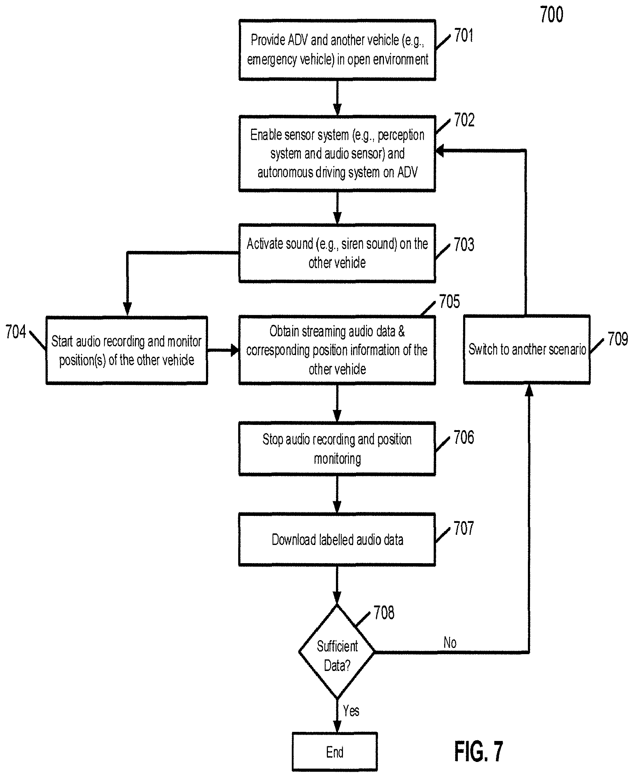

Figure 7 is a flow diagram of a method for automatic generation of labelled audio data in a specific driving scenario according to one embodiment. Method or process 700 may be performed by ADV 101 of Figure 1 and another vehicle.

Referring to Figure 7, at block 701, an ADV (e.g., ADV 101) and another vehicle (e.g., an emergency vehicle) are provided in an open environment. At block 702, a sensor system (e.g., perception system and audio sensor) and ADS on ADV are enabled. At block 703, a sound (e.g., siren sound) on the other vehicle is activated. At block 704, audio recording of the sound and monitoring of one or more positions of the other vehicle are started on the ADV. At block 705, streaming audio data and corresponding position information of the other vehicle are obtained (e.g., by the ADS system and sensor system on the ADV). At block 706, the audio recording and position monitoring are stopped. At block 707, the streaming audio data and corresponding position information are downloaded as labelled audio data. At block 708, it is determined whether the downloaded labelled audio data is sufficient for different driving scenarios. For example, the determination may be whether the labelled audio data covers scenarios where the ADV is stationary and the other vehicle is in motion, the other vehicle is stationary and the ADV 101 is in motion, both ADV and the other vehicle are in motion, and/or both the ADV and the other vehicle are stationary. If it is determined that the downloaded labelled audio data is sufficient, the process ends. Otherwise, at block 709, it is switched to another scenario (e.g., a scenario that has not been configured) and the process returns to block 702.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of the disclosure also relate to an apparatus for performing the operations herein. Such a computer program is stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that comprises hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Embodiments of the present disclosure are not described with reference to any particular programming language. It will be appreciated that a variety of programming languages may be used to implement the teachings of embodiments of the disclosure as described herein.

In the foregoing specification, embodiments of the disclosure have been described with reference to specific exemplary embodiments thereof. It will be evident that various modifications may be made thereto without departing from the broader spirit and scope of the disclosure as set forth in the following claims. The specification and drawings are, accordingly, to be regarded in an illustrative sense rather than a restrictive sense.

## Claims

1. A computer-implemented method for automatic generation of labelled audio data, the method being performed by an autonomous driving system (ADS) of an autonomous driving vehicle (ADV), the method comprising:
recording a sound emitted by an object within a driving environment, and converting the recorded sound into audio data;
capturing at least one position of the object while the sound is being recorded; and
automatically labelling the audio data using the captured at least one position of the object as an audio label, to generate labelled audio data, wherein the labelled audio data is utilized to subsequently train a machine learning algorithm to recognize a sound source during autonomous driving of the ADV.

2. The method of claim 1, further comprising: determining that the captured at least one position of the object corresponds to at least one position of a sound source that emits the sound.

3. The method of any of claims 1-2, wherein automatically labelling the audio data comprises tagging the audio data with the captured at least one position of the object.

4. The method of any of claims 1-3, wherein capturing the at least one position of the object comprises:
determining a direction vector from the ADV to the object, and
determining a direction angle based on the direction vector and a reference horizontal axis of the ADV.

5. The method of any of claims 1-4, wherein the ADV is stationary and the object is in motion.

6. The method of any of claims 1-4, wherein the ADV is in motion and the object is stationary.

7. The method of any of claims 1-4, wherein the ADV and the object are in motion.

8. The method of any of claims 1-7, wherein the object is an emergency vehicle.

9. The method of any of claims 1-8, wherein the sound is a siren sound.

10. An autonomous driving system of an autonomous driving vehicle (ADV), the system comprising:
a processor; and
a memory coupled to the processor to store instructions, which when executed by the processor, cause the processor to perform operations of the method according to any of claims 1-9.

11. A method for automatic generation of labelled audio data in a driving scenario, the method comprising:
providing an autonomous driving vehicle (ADV) and another vehicle in a driving environment;
activating a sound on the other vehicle;
starting, on the ADV, audio recording of the sound and monitoring of one or more positions of the other vehicle;
obtaining, on the ADV, streaming audio data comprising the recorded audio and corresponding position information of the other vehicle;
stopping, on the ADV, the audio recording and the monitoring of the one or more positions of the other vehicle; and
downloading, on the ADV, the streaming audio data and the corresponding position information of the other vehicle as the labelled audio data.

12. The method of claim 11, further comprising:
determining whether the downloaded labelled audio data is sufficient for different driving scenarios; and
switching to another driving scenario in response to determining that the downloaded labelled data is insufficient for the different driving scenarios.
